# EUROPEAN PATENT SPECIFICATION

(11) **EP 3 768 951 B1**
(45) Date of publication and mention of the grant of the patent: **22.02.2023**
(21) Application number: 19712742.6
(22) Date of filing: 19.03.2019
(51) Int. Cl.: F01D 21/04

(54) **FAN TRACK LINER**
AUSKLEIDUNG FÜR GEBLÄSESCHIENE
CHEMISAGE POUR CHEMIN DE GUIDAGE DE VENTILATEUR

(30) Priority: 22.03.2018 GB 201804568
(43) Date of publication of application: 27.01.2021
(73) Proprietor: Rolls-Royce plc, London N1 9FX (GB)
(72) Inventor: HALL, Steven M, Derby DE24 8BJ (GB)
(74) Representative: Rolls-Royce plc
(86) International application number: PCT/EP2019/056795
(87) International publication number: WO 2019/179994

(56) References cited:
- EP-A2- 2 447 478
- WO-A1-2012/065155
- WO-A1-2015/094421
- CN-A- 103 089 345
- US-A1- 2011 126 508
- US-A1- 2018 009 201

## Description

The invention relates to a fan track liner.

Known turbofan engines comprise a fan towards an upstream end of the engine, comprising a plurality of blades. Each fan blade is connected to a central fan disc, and in use is driven to rotate by a corresponding turbine stage of the engine.

Typically, such engines include a fan blade containment disposed circumferentially about the fan. In the rare event that a portion or the whole of a fan blade becomes detached from the fan disc (a fan-blade-off event), for example following a foreign object strike, the fan blade containment is provided to contain the fan blade.

A known containment arrangement includes an outer casing and a fan track liner comprising honeycomb material, such as aluminium honeycomb. During a fan-blade-off event, fan blade material impacts the honeycomb fan track liner, which is compressed and/or crushed as it absorbs the energy of the impacting blade.

It is thought that containment arrangements for composite fans (i.e. in which the fan blades comprise fibre-reinforcement material) may benefit from the lighter weight of the composite fan blades as compared with all-metal fan blades, such that the containment arrangement may be required to absorb relatively less impact energy and consequently be lighter themselves. However, known composite fan blades include metalwork at edge regions (e.g. the leading edge, trailing edge or tip), which may interact with the containment arrangement in a different manner to the composite material.

In particular, a containment arrangement may be susceptible to being cut by fan blade metal work in a fan-blade-off event, rather than being crushed by the fan blade metalwork. It has been proposed to provide a containment arrangement having structures of different crush strength, such that an impact load of fan blade material may be spread over an area to prevent cutting action. For example, such structures may include a septum layer between layers of cellular material, or layers of cellular material having different crush strengths.

CN103089345 discloses an accommodating device used for a rotary component comprising a shell, reinforcing fibers and shearing thickening liquid. An annular accommodating cavity is disposed in the shell, the reinforcing fibers are filled in at least one part of the accommodating cavity, and the shearing thickening liquid flowably fills at least one part of the cavity and dips the reinforcing fibers.

WO 2012065155 discloses a blade off protection system which provides a pass through panel and a stop panel. The pass through panel and the stop panel are multi-layered panels that provide one or more fire resistant layers, energy absorbing layers, and ballistic layers.

According to a first aspect of the disclosure there is provided a fan track liner assembly for a containment arrangement of a gas turbine engine, the assembly comprising a cellular reactive impact structure, wherein cells of the reactive impact structure contain a reactive material having shear-thickening or shear-stiffening properties; whereby the reactive impact structure is compliant during assembly to accommodate geometrical non-compliance in the fan track liner assembly.

The reactive material may comprise a dilatant. Dilatants are a class of material which flows viscously at low strain rate and stiffens at higher strain rates by virtue of increasing in viscosity.

The reactive material may comprise a polymeric material. For example, the reactive material may comprise a dilatant polymer such as polyborondimethylsiloxane (PBDMS). PBDMS is responsive to strain rate, such that it has a high modulus of elasticity at relatively high strain rates, and a lower modulus of elasticity at lower strain rates so as to be malleable (i.e. compliant). A dilatant polymer may be provided in a matrix, for example in a foam matrix. A foam matrix may comprise an elastomeric polymer. US 2005/0037189 discloses an example of a self-supporting energy absorbing composite including a polymer-based dilatant and a fluid (such as a gas) distributed through a matrix.

Other example reactive materials may include a dispersion of solid particles in a viscous fluid, for example as described in US 5,599,290. A further example of a shear-thickening fluid is a suspension of silica nanoparticles in polyethylene glycol.

Further examples of reactive materials which may be used are provided in WO 2017/068513, which discloses reactive materials which must be retained in an enveloping structure (e.g. a cell), and also self-supporting reactive materials.

The cellular reactive impact structure may comprise a shell containing the reactive material. The shell may be configured to resist deformation of the shell under normal operational loads so that in normal operating conditions (i.e. which exclude a failure event such as a fan blade off event) the cellular impact structure does not flex and the reactive material is not subject to shear strain.

The reactive impact structure may be configured to deform under impact loads associated with a failure event (such as a fan blade off event), so that in a failure event the reactive material increases in stiffness under shear. For example, a failure event may comprise a projectile impacting the fan track liner assembly to deform and/or penetrate the cellular reactive impact structure.

The assembly may be arcuate about a longitudinal axis of the fan track liner assembly. In other words, the assembly may extend circumferentially with respect to the longitudinal axis of the fan track liner assembly. The longitudinal axis of the fan track liner assembly may correspond to a centreline axis of a gas turbine engine. The fan track liner assembly may have both an arcuate (i.e. circumferential) extent, a longitudinal extent and a radial extent (i.e. a thickness).

The reactive impact structure may comprise a honeycomb material. The honeycomb material may define cells of the cellular impact structure. For example, the cellular impact structure may comprise expanded or corrugated honeycomb material, such as aluminium or Nomex^{®} honeycomb.

The reactive impact structure may comprise fibre-reinforced composite material. At least some cells of the cellular impact structure may be defined by fibre-reinforced composite material.

The reactive impact structure may comprise a corrugated cellular member comprising a plurality of cells defined between a corrugated layer and a base layer, wherein the cells contain the reactive material. The corrugated cellular member may be arcuate about a longitudinal axis of the fan track liner assembly. The corrugated cellular member and/or the base layer may comprise fibre-reinforced composite material.

The reactive impact structure may comprise two intermeshing corrugated cellular members.

The fan track liner assembly may comprise a second cellular impact structure provided as a layer radially around or radially within the reactive impact structure. The second impact structure may have a radial stiffness which is greater than a radial stiffness of the reactive impact structure at relatively low strain rates associated with normal operational or manufacturing assembly loads. The reactive impact structure may have a higher radial stiffness than the second impact structure at relatively high strain rates associated with a failure event. The second impact structure may be disposed radially outside the reactive impact structure.

The fan track liner assembly may further comprise a third cellular impact structure provided as a layer so that the reactive impact structure is radially between the second and third cellular impact structures. The third impact structure may have a radial stiffness which is greater than a radial stiffness of the reactive impact structure at relatively low strain rates associated with normal operational or manufacturing assembly loads.

The reactive impact structure may have a higher radial stiffness than the third impact structure at relatively high strain rates associated with a failure event.

According to a second aspect there is provided a method of manufacturing a fan track liner assembly, comprising: providing a cellular impact structure with a reactive material having shear-thickening or shear-stiffening properties to form a reactive impact structure having cells containing the reactive material; assembling components of the fan track liner assembly together including the reactive impact structure; whereby the reactive impact structure is compliant during assembly to accommodate geometrical non-compliance of components in the fan track liner assembly.

The reactive impact structure may comprise honeycomb material.

Providing the cellular impact structure may comprise forming a corrugated cellular member by: providing a ridged former on a base layer of composite material; and laying-up composite material over the former to provide a corrugated layer.

The ridged former may comprise a plurality of discrete ridge elements.

Providing the cellular impact structure may comprise forming intermeshing corrugated cellular members. One of the intermeshing cellular members may be formed over a concave mandrel, and the other may be formed over a convex mandrel.

The method may comprise removing the ridged former to define cells between the corrugated layer and the base layer.

The method may further comprise curing at least the composite material of the corrugated layer after lay-up of the corrugated layer and before removing the ridged former.

The ridged former may comprise a reactive material, e.g. a material having shear-thickening or shear-stiffening properties. For example, the reactive material may be a self-supporting reactive material such as a polymer dilatant within a polymer matrix. The method may further comprise filling cells of the reactive impact structure with reactive material after forming the cells.

Assembling components of the fan track liner assembly together may comprise: providing a second cellular impact structure as a layer radially around or within the reactive impact structure, the second impact structure having a radial stiffness which is greater than a radial stiffness of the reactive impact structure at relatively low strain rates associated with normal operational or manufacturing assembly loads.

The reactive impact structure may have a higher radial stiffness than the second impact structure at relatively high strain rates associated with a failure event.

The fan track liner may be assembled so that the second impact structure is disposed radially outside the reactive impact structure.

Assembling components of the fan track liner assembly together may further comprise: providing a third cellular impact structure as a layer so that the reactive impact structure is radially disposed between the second and third cellular impact structures. The third impact structure may have a radial stiffness which is greater than a radial stiffness of the reactive impact structure at relatively low strain rates associated with normal operational or manufacturing assembly loads.

The disclosure may comprise any combination of the features and/or limitations referred to herein, except combinations of such features as are mutually exclusive. Embodiments of the present invention will now be described, by way of example only, with reference to the accompanying drawings, in which:
Figure 1 schematically shows a gas turbine engine;
Figure 2 schematically shows an axial cross section of an example casing and fan track liner assembly;
Figure 3 schematically shows a longitudinal cross section of the casing and fan track liner assembly of Figure 2
Figures 4 and 5 schematically show axial and longitudinal cross-sections of a second example casing and fan track liner assembly;
Figures 6 and 7 schematically show tooling and a pre-form for a composite cellular structure;
Figures 8 and 9 are flowchart of example methods of manufacturing a cellular impact structure.
Figure 10 is a flowchart of an example method of manufacturing a fan track liner assembly.

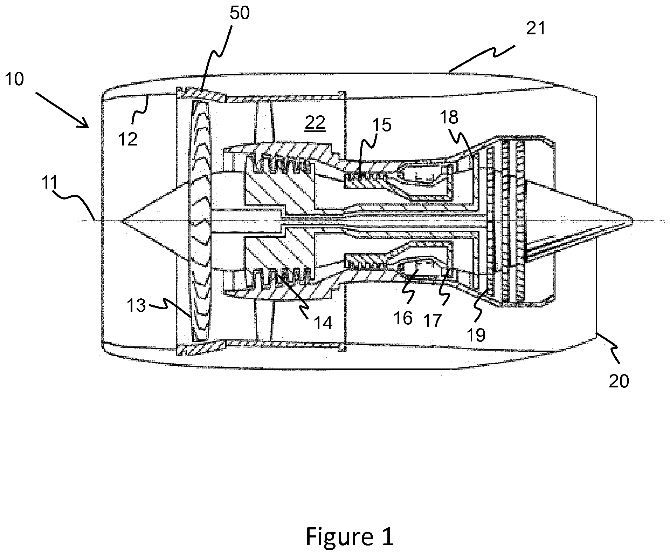

With reference to **Figure 1**, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

As shown in Figure 1, the fan is surrounded by a containment arrangement 50.

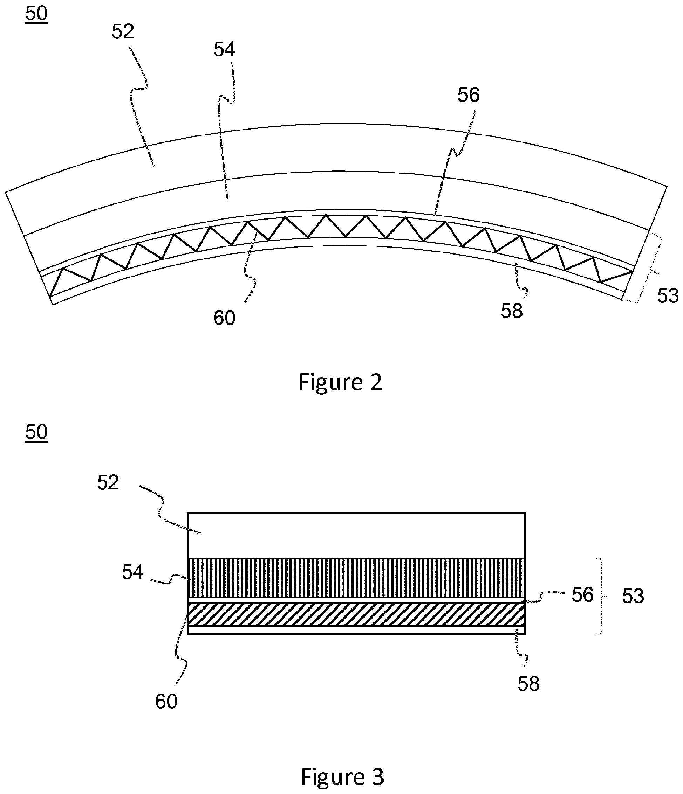

**Figure 2** shows a semi-annular segment of the containment arrangement 50. The term semi-annular is used herein to indicate that a component or a portion of a component extends circumferentially about an axis (in this case the principal axis 11), but has an angular extent of less than a full revolution. In other words, the component or portion of it referred to is arcuate. **Figure 3** shows the segment of the containment arrangement in longitudinal cross section (i.e. in a plane extending radially and longitudinally with respect to the principal axis 11).

The containment arrangement 50 comprises an annular casing 52 and a fan track liner radially within the casing 52. In this example, the containment arrangement is for a composite fan blade. The example casing 52 comprises composite material (e.g. CFRP - carbon fibre reinforced polymer).

In this example, the casing 52 is a full annulus (a limited angular range of which is shown in Figure 1), whereas the fan track liner comprises a plurality of semi-annular fan track liner assemblies or panels. In this example, each fan track liner assembly has an angular extent of 45° such that there are eight assemblies around the annulus. In other examples, a fan track liner assembly may constitute a full annulus.

The fan track liner assembly 53 comprises an outer cellular impact structure 54 to be received radially within the casing 52, a septum layer 56, a cellular reactive impact structure 60 disposed radially within the outer structure 43, and a radially-inner abradable layer 58. The reactive impact structure 60 may be referred to herein as a first cellular impact structure and the outer cellular impact structure 54 may be referred to herein as a second cellular impact structure.

The example outer cellular structure 54 comprises aluminium honeycomb material. For example, the honeycomb material may comprise expanded cells having a cell axis (i.e. the elongate direction of each cell) oriented with the radial direction of the containment arrangement with respect to the principal axis 11.

The example septum layer 56 is radially within the outer cellular structure 54, between the outer cellular structure and the reactive impact structure 60. In this example, the septum layer 56 comprises glass-fibre reinforced polymer (GFRP).

The cellular reactive impact structure 60 is radially within the septum layer 56. In this example, the reactive impact structure 60 comprises composite material defining a shell having a plurality of axially-extending cells. The cells of the shell contain a reactive material. In this particular example, the reactive impact structure 60 comprises a corrugated layer of composite material sandwiched between an inner circumferential layer and an outer circumferential layer of composite material, so that a plurality of prism-shaped cells are defined therebetween to receive the reactive material. The cells are closed at either end by composite material, such that the shell of the reactive impact structure has a closed-cell construction. In other examples, the reactive impact structure may be of a different type, for example an aluminium or Nomex^{®} honeycomb structure.

In this example, the abradable layer 58 is radially within the reactive impact structure 60 and is configured to partly define the gas-washed surface of an annulus flow through the engine.

In an assembled engine, a fan is disposed within the containment arrangement 50 so that the tips of the fan blades are adjacent the abradable layer 58. In some examples, the fan blades may be rotated to intersect and abrade the abradable layer to improve the clearance between the blade and the containment arrangement. In particular, a fan blade may radially extend under centrifugal loading so that a tip of the fan blade may intersect and abrade the abradable layer 58.

As will be appreciated, in a normal mode of operation, the fan rotates within the containment arrangement without fan blade material impacting the fan track liner.

The containment arrangement is provided in order to safely accommodate a failure event which results in the impact of fan blade material (or other material) into the fan track liner, such as a fan-off-event. Such failures are considered to be abnormal. Accordingly, the expression "a normal mode of operation" as used herein is intended to denote operation of the associated gas turbine engine in the absence of a failure that would result in impact of material into the fan track liner. Such failures may typically result in the engine being shut down, and taken out of operation.

Containment arrangements may therefore be considered to be passive components in normal operation, and are only designed to perform a particular function in the event of a failure. In particular, they are designed to crush and deform in order to absorb impacts in the event of a failure resulting in the impact of material into the containment arrangement.

There is no functional requirement for a containment arrangement to deform or flex during normal operation. Accordingly, the various structures of a containment arrangement are typically static under normal operating loads (i.e. loads experienced in normal operating conditions). Such structures may be considered to be substantially rigid under normal operating loads

As described above, the reactive impact structure contains a reactive material having shear-thickening or shear-stiffening properties. Such materials may increase in viscosity increases in response to an increase in the rate of strain, in particular shear strain. A shear-thickening fluid is one type of non-Newtonian fluid, and may be otherwise referred to as a dilatant.

A shear-thickening material may therefore flow relatively freely at low rates of strain (deformation), but increase in viscosity at high rates so as to effectively stiffen or harden.

Such reactive materials may be provided as a fluid retained by the cell walls of the reactive impact structure, or as a self-supporting material such as a foam matrix comprising a dilatant material.

Shear-thickening fluids have previously been considered for use in personal protection equipment owing to their ability to permit flexible movement at low strain rates, but to harden upon impact (for example, owing to a sports impact or a projectile) to provide protection. For such uses, shear-thickening materials may be provided in a foam and incorporated into a garment.

As will be appreciated, a fan track liner does not flex in normal operation.

However, the use of reactive materials in the reactive impact structure of the fan track liner assembly enables the reactive impact structure to have different stiffness properties during manufacture and assembly (low strain rates) and during a failure event, such as a fan-blade off event.

In particular, in a failure event the reactive material stiffens under strain to improve the local distribution of impact loads through both the reactive impact structure and into the outer impact structure 54.

In an example fan-blade-off event, the local stress at an impact point upon impact of fan blade material on the fan track liner may be sufficiently high to cause the reactive impact structure 60 to locally deform or crush.

The respective cells are deformed so that the reactive material experiences an increasing rate of shear, such that its viscosity increases and it stiffens. Accordingly, the impact stress is distributed throughout the cells and over a corresponding local reaction area in the reactive impact structure. The impact stress on the local reaction area may have the further effect of straining and deforming neighbouring cells, with consequent stiffening of reactive material contained therein to further distribute the impact stresses and expand the local reaction area within the reactive impact structure. Accordingly, energy may be absorbed in neighbouring cells by deformation of the respective cells.

In this example, the local reaction area in the reactive impact structure is sufficiently large that the local stresses transmitted into the septum layer 56 are low enough to prevent shearing (i.e. cutting) of the septum layer 56. The septum layer 56 therefore acts to further distribute the local stresses into neighbouring portions of the septum layer 56, to further expand the local reaction area. The local stresses are further distributed into the outer cellular structure 54.

In a failure event, the shear-thickening or shear-stiffening effect of the reactive material may be such that the reactive impact structure 60 responds in substantially the same way as if it were filled with a non-reactive filler material, such as a thermoset reinforced resin. In particular, the dynamic response of the reactive material to stiffen may be substantially instantaneously.

The addition of a conventional (or reactive) filler material to a cellular impact structure has the effect of increasing its flexural rigidity and/or crush strength in a failure event. For example, a low density un-filled cellular impact structure may have a lower flexural rigidity and/or crush strength than a high density un-filled cellular impact structure, but may have a similar flexural rigidity or crush strength to the high density impact structure when filled with a conventional filler material.

When a reactive filler material is used, the material properties of the reactive impact structure may differ at different strain rates. Accordingly, the flexural rigidity and/or crush strength of the impact structure may substantially correspond to that of the unfilled cellular structure at low strain rates, but may be improved (i.e. greater flexural rigidity and/or crush strength) at higher strain rates - e.g. during a failure event - so as to respond in the manner of a conventionally-filled cellular impact structure, or one having a higher density.

This may be advantageous for assembly or manufacture of a fan track liner assembly. In particular, a reactive impact structure may be provided which is relatively compliant whilst it is manipulated, placed for assembly and formed to provide the fan track liner assembly (all of which may involve low strain rates), yet adopts a higher flexural rigidity and/or crush strength in use in a failure event (i.e. at higher strain rates).

Compliance (e.g. relatively low flexural rigidity) during manufacture and/or assembly may be particularly advantageous in the context of a fan track liner assembly, as components of the fan track liner assembly are typically substantially rigid under assembly loads, and therefore difficult to assemble together. In particular, the assembly of substantially rigid fan track liner components may require very narrow tolerances on geometrical compliance which may place a burden on the manufacturing accuracy, or otherwise on post-manufacturing machining. If wider manufacturing tolerances are used such that there is geometrical non-conformance between adjacent components, one option to aid the assembly of the substantially rigid components has been to introduce a relative flexible or conformable layers therebetween. However, such layers may reduce the performance and material properties of the fan track liner in a failure event.

Accordingly, by providing a cellular reactive impact structure within a fan track liner assembly, the reactive impact structure may be compliant during assembly and manufacture (e.g. by flexure or deformation) to accommodate geometrical non-compliance, manufacturing tolerance or imperfect placement of other components in the assembly, such as the substantially rigid radially-outer cellular impact structure 54.

References herein to a component which is substantially rigid under assembly loads may be interpreted to mean that the flexural rigidity or radial stiffness of the component is greater than that of the reactive impact structure (or that of the underlying unfilled cellular structure of the reactive impact structure) at low strain rates associated with normal operational or manufacturing and assembly loads.

In some examples, the reactive impact structure may have radial stiffness at high strain rates which is equal to or greater than such substantially rigid components (e.g. the outer cellular impact structure 54).

In the example of Figures 3-4, the fan track liner includes a septum 56 and an outer cellular structure 54 which do not contain a reactive material. In other examples, there may be no septum and outer cellular structure, and a cellular structure containing reactive material may be mounted directly on a casing, such as the casing 52.

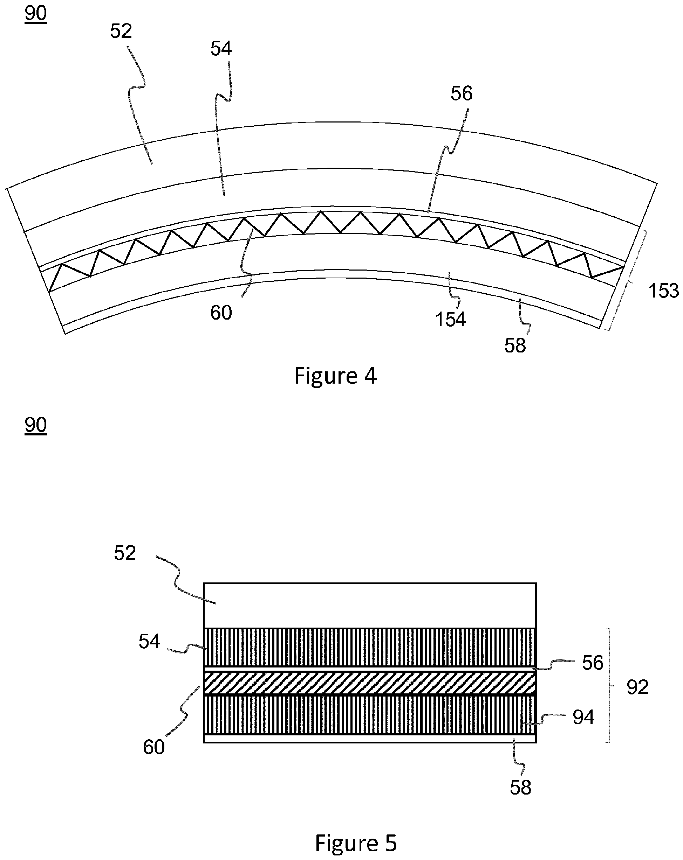

**Figures 4 and 5** show a further example containment arrangement 90 which differs from the containment arrangement 50 described above with respect to Figures 3 and 4 in that there is a third cellular impact structure 94 in the fan track liner 92 provided as a layer so that the reactive impact structure is radially between the second and third cellular impact structures 54, 94.

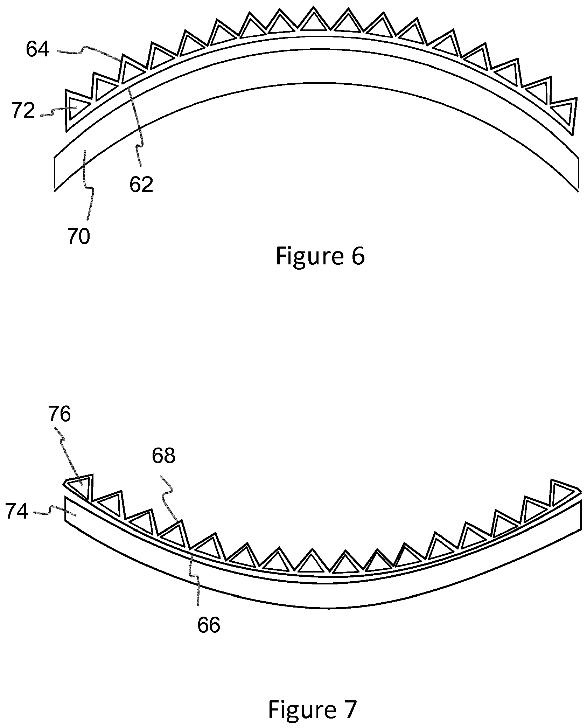

**Figures 6 and 7** show a pre-form and tooling for a cellular impact structure such as the reactive impact structure 60 described above with respect to Figures 2 to 5.

Figure 6 shows a convex lay-up tool 70 for laying up an inner cellular member of the reactive impact structure, and Figure 7 shows a concave lay-up tool 74 for laying-up an outer cellular member of the reactive impact structure.

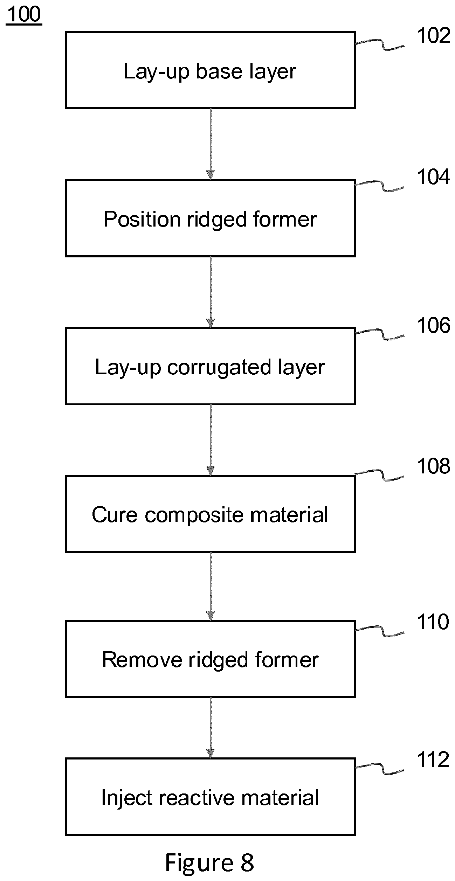

A first example method 100 of manufacturing a reactive impact structure will now be described with reference to the convex tool 70 of Figure 6 and the flowchart of **Figure 8**. Reference numerals in brackets indicate steps shown in the flowchart.

Composite material is applied onto the convex tool 70 to form an inner base layer 62 of the cellular structure (102). For example, the composite material may be applied manually, by automatic tape laying (ATL) or automatic fibre placement (AFP).

A former 72 is placed over the inner base layer 62 (104). In this example, the former comprises a plurality of discrete prism-shaped aluminium formers 72. In particular, they are each elongate along a direction parallel with the principal axis and have a triangular cross section. In other examples, the formers may extend along a different direction, such as a helical direction.

Composite material is applied over the formers 72 to form a corrugated layer 64 (106). In this example, there is space between the formers so that the corrugated layer 64 engages the base layer 62 between the formers. The corrugated layer 64 is also laid onto the base layer 62 at both angular ends of the base layer 62. Composite material is applied to define an enclosure at one end of the formers.

The composite material of the base layer 62 and corrugated layer 64 is cured (108). In this example, a membrane is applied over the corrugated layer 64 and the tool 70 and a vacuum applied through a port in the membrane to the space therebetween so that a consolidating force is applied to the composite material. The composite material is heated, for example by conduction through the tool, or by placing the tool and composite material into an autoclave.

After curing, the formers are withdrawn from the cellular structure to reveal prism-shaped cavities or cells (110). Each cell is then injected with reactive material (112). In this example, the reactive material is a shear-thickening fluid which is suitable for injection, such as suspension of silica nanoparticles in polyethylene glycol - however any suitable fluid may be used.

The same method is applied to form an opposing concave cellular member of the cellular structure, comprising a base layer 66 applied onto a concave mould 74, and a corrugated layer applied over formers 76 as described above.

The opposing convex and concave cellular members intermesh and are joined together to form a cellular impact structure containing reactive material. In this example, the enclosures provided at one end of the formers in each cellular member are provided at opposite ends and configured to overlie cells of the opposing member. Accordingly, assembly of the two cellular members together causes the opposing enclosures to close the cells at both ends. In this example, the convex and concave cellular members are at least partially cured individually before assembling together. However, in other examples, one member may be laid-up over the other and the two members cured together as a unitary body.

The cellular reactive impact structure may then be assembled with other layers or components of a fan track liner assembly or panel, and multiple fan track liner panels assembled onto a casing of a gas turbine engine to provide a containment arrangement. As described above, the reactive impact structure is compliant during assembly (i.e. at the low strain rates associated with manipulation and placement of components during assembly) to accommodate geometrical non-compliance in the fan track liner assembly. The compliance of the reactive impact structure may also accommodate differential thermal expansion of components of the fan track liner assembly, for example during manufacture/assembly or in operation.

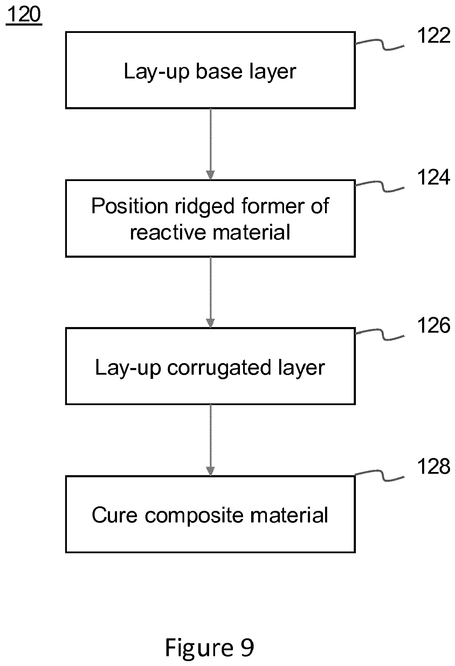

Figure 9 shows a second example method 120 of manufacturing a reactive impact structure, which will now be described with reference to the convex tool 70 of Figure 6. Reference numerals in brackets indicate steps shown in the flowchart).

The second example method 120 differs from the first example method 100 only in that the ridged former comprises a reactive material, such that the steps of the first example method 100 of removing the ridged former and subsequently injecting reactive material are omitted.

Accordingly, the method includes steps of laying up the base layer 62 (122), positioning the ridged former of reactive material (124), laying-up the corrugated layer 64 (126) and curing the composite material (128).

In this example, the reactive material is a self-supporting material, such as a polymer foam provided with a reactive polymer. For example, the reactive material may comprise polyborondimethylsiloxane (PBDMS) provided in a self-supporting polymer matrix foam.

Although examples of a cellular reactive impact structures have been described which have a radial thickness of one cell, it will be appreciated that in other examples, a cellular reactive impact structure may have multiple radial layers.

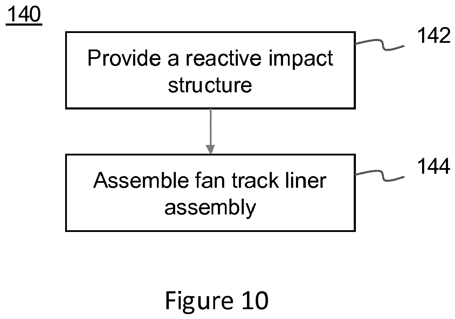

Figure 10 shows a flowchart of a method 140 of assembling a fan track liner assembly. In step 142, a reactive impact structure is provided. For example, the reactive impact structure may be manufactured in accordance with the first or second example methods 100, 120 described above, or by any other suitable manufacturing method. For example, the reactive impact structure may comprise a honeycomb structure injected with reactive material.

In step 144, the components of the fan track liner assembly are assembled together. For example and with reference to the containment arrangement 50 of Figure 2, a radially-outer cellular impact structure 54 of high density carbon fibre reinforced polymer honeycomb may be provided; a septum layer 56 of glass fibre reinforced polymer may be provided radially within the outer cellular impact structure 54, the reactive impact structure 60 may be provided radially within the septum layer 56, and the abradable layer 58 may be provided radially within the reactive impact structure.

During assembly, the reactive impact structure is manipulated and placed under low load and therefore experiences a low or negligible strain rate. Accordingly, the reactive material is compliant and the flexural rigidity and/or radial stiffness of the reactive impact structure substantially corresponds to that of the underlying cellular impact structure (i.e. as unfilled). The reactive impact structure is therefore compliant to accommodate geometrical non-compliance in the fan track liner assembly. For example, if the outer cellular impact structure 54 is marginally misaligned or has a non-conforming profile at the interface with the septum 56, the reactive impact structure may deform at low strain rate under assembly loads to accommodate such geometrical non-compliance.

Geometrical non-compliance may not be an important factor for individual component performance, but may cause significant manufacturing and assembly problems. By way of example, in a typical containment arrangement an outer casing is substantially rigid and the inner surface of the fan track liner (e.g. of an abradable layer) must be substantially circumferential and coaxial to mate with the tip of a fan blade. Accordingly, geometrical non-compliance in any of the components in the fan track liner assembly may cause the profile of the inner surface of the fan track liner to be offset, or may otherwise cause voids or stress concentrations within the fan track liner. By providing a reactive impact structure as disclosed herein, such geometrical non-compliance may be accommodated by deformation of the reactive impact structure at low strain rates associated with assembly, whilst still permitting the reactive impact structure to have stiff material properties for a failure event, such as a fan-blade-off event.

Accordingly, the provision of a reactive impact structure may permit manufacturing tolerances to be relaxed and/or rejection of non-compliant components to be reduced.

It will be understood that the disclosure is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A fan track liner assembly (53) for a containment arrangement of a gas turbine engine, the assembly comprising a cellular reactive impact structure (60), **characterized in that** cells of the reactive impact structure contain a reactive material having shear-thickening or shear-stiffening properties;
whereby the reactive impact structure is compliant during assembly to accommodate geometrical non-compliance in the fan track liner assembly.

2. A fan track liner assembly according to claim 1, wherein the reactive impact structure is configured to deform under impact loads associated with a failure event, so that in a failure event the reactive material increases in stiffness under shear.

3. A fan track liner assembly according to any preceding claim, wherein the reactive impact structure comprises fibre-reinforced composite material;
optionally wherein the reactive impact structure comprises a corrugated cellular member comprising a plurality of cells defined between a corrugated layer (64) and a base layer (62), wherein the cells contain the reactive material;
optionally wherein the reactive impact structure comprises two intermeshing corrugated cellular members.

4. A fan track liner assembly according to any preceding claim, comprising a second cellular impact structure (54) provided as a layer radially around or radially within the reactive impact structure, the second impact structure having a radial stiffness which is greater than a radial stiffness of the reactive impact structure at relatively low strain rates associated with normal operational or manufacturing assembly loads;
optionally wherein the second impact structure is disposed radially outside the reactive impact structure.

5. A fan track liner assembly according to claim 4, wherein the reactive impact structure has a higher radial stiffness than the second impact structure at relatively high strain rates associated with a failure event.

6. A fan track liner assembly according to any of claims 4-5, further comprising a third cellular impact structure (94) provided as a layer so that the reactive impact structure is radially between the second and third cellular impact structures; and
wherein the third impact structure has a radial stiffness which is greater than a radial stiffness of the reactive impact structure at relatively low strain rates associated with normal operational or manufacturing assembly loads.

7. A method of manufacturing a fan track liner assembly, comprising:
providing a cellular impact structure with a reactive material having shear-thickening or shear-stiffening properties to form a reactive impact structure (60) **characterized by** having cells containing the reactive material;
assembling components of the fan track liner assembly together including the reactive impact structure;
whereby the reactive impact structure is compliant during assembly to accommodate geometrical non-compliance of components in the fan track liner assembly.

8. A method according to claim 7, wherein providing the cellular impact structure comprises forming a corrugated cellular member (64) by:
providing a ridged former (72) on a base layer (62) of composite material;
laying-up composite material over the former to provide a corrugated layer;
optionally wherein the ridged former comprises a plurality of discrete ridge elements.

9. A method according to claim 8, wherein providing the cellular impact structure comprises forming intermeshing corrugated cellular members;
optionally wherein one of the intermeshing cellular members is formed over a concave mandrel, and the other is formed over a convex mandrel.

10. A method according to any of claims 8 to 9, further comprising removing the ridged former to define cells between the corrugated layer and the base layer;
optionally further comprising curing at least the composite material of the corrugated layer after lay-up of the corrugated layer and before removing the ridged former.

11. A method according to any of claims 8 to 9, wherein the ridged former comprises a reactive material having shear-thickening or shear-stiffening properties.

12. A method according to any of claims 7 to 10, further comprising filling cells of the reactive impact structure with reactive material after forming the cells.

13. A method according to any of claims 7 to 12, wherein assembling components of the fan track liner assembly together comprises:
providing a second cellular impact structure (54) as a layer radially around or within the reactive impact structure, the second impact structure having a radial stiffness which is greater than a radial stiffness of the reactive impact structure at relatively low strain rates associated with normal operational or manufacturing assembly loads;
optionally wherein the reactive impact structure has a higher radial stiffness than the second impact structure at relatively high strain rates associated with a failure event.

14. A method according to claim 13, wherein the fan track liner is assembled so that the second impact structure is disposed radially outside the reactive impact structure.

15. A method according to any of claims 13 to 14, wherein assembling components of the fan track liner assembly together further comprises:
providing a third cellular impact structure (94) as a layer so that the reactive impact structure is radially disposed between the second and third cellular impact structures; and
wherein the third impact structure has a radial stiffness which is greater than a radial stiffness of the reactive impact structure at relatively low strain rates associated with normal operational or manufacturing assembly loads.

## Patentansprüche

1. Fan-Track-Liner-Anordnung (53) für eine Containment-Vorrichtung eines Gasturbinentriebwerks, wobei die Anordnung eine zellulare reaktive Aufprallstruktur (60) umfasst,
**dadurch gekennzeichnet, dass** Zellen der reaktiven Aufprallstruktur ein reaktives Material mit scherverdickenden oder scherversteifenden Eigenschaften aufweisen;
wodurch die reaktive Aufprallstruktur während der Anordung nachgiebig ist, um eine geometrische Nichtnachgiebigkeit in der Fan-Track-Liner Anordnung auszugleichen.

2. Fan-Track-Liner-Anordnung nach Anspruch 1, wobei die reaktive Aufprallstruktur so konfiguriert ist, dass sie sich unter Aufpralllasten verformt, die mit einem Versagensereignis verbunden sind, so dass bei einem Versagensereignis die Steifigkeit des reaktiven Materials unter Scherung zunimmt.

3. Fan-Track-Liner-Anordnung nach einem der vorhergehenden Ansprüche, wobei die reaktive Aufprallstruktur faserverstärktes Verbundmaterial umfasst;
optional wobei die reaktive Aufprallstruktur ein gewelltes zellulares Element umfasst, das eine Vielzahl von Zellen umfasst, die zwischen einer gewellten Schicht (64) und einer Basisschicht (62) definiert sind, wobei die Zellen das reaktive Material enthalten;
optional wobei die reaktive Aufprallstruktur zwei ineinandergreifende gewellte zellulare Elemente umfasst.

4. Fan-Track-Liner-Anordnung nach einem der vorhergehenden Ansprüche, umfassend eine zweite zellulare Aufprallstruktur (54), die als Schicht radial um oder radial innerhalb der reaktiven Aufprallstruktur bereitgestellt ist, wobei die zweite Aufprallstruktur eine radiale Steifigkeit aufweist, die höher als eine radiale Steifigkeit der reaktiven Aufprallstruktur bei relativ niedrigen Dehnungsraten ist, die mit normalen Betriebs- oder Herstellungs-Anordnungslasten verbunden sind;
optional wobei die zweite Aufprallstruktur radial außerhalb der reaktiven Aufprallstruktur angebracht ist.

5. Fan-Track-Liner-Anordnung nach Anspruch 4, wobei die reaktive Aufprallstruktur eine höhere radiale Steifigkeit als die zweite Aufprallstruktur bei relativ hohen Dehnungsraten aufweist, die mit einem Versagensereignis verbunden sind.

6. Fan-Track-Liner-Anordnung nach einem der Ansprüche 4-5, ferner umfassend eine dritte zellulare Aufprallstruktur (94), die als Schicht bereitgestellt ist, so dass die reaktive Aufprallstruktur radial zwischen der zweiten und der dritten zellularen Aufprallstruktur liegt; und
wobei die dritte Aufprallstruktur eine radiale Steifigkeit aufweist, die höher als eine radiale Steifigkeit der reaktiven Aufprallstruktur bei relativ niedrigen Dehnungsraten ist, die mit normalen Betriebs- oder Herstellung-Anordnungslasten verbunden sind.

7. Verfahren zum Herstellen einer Fan-Track-Liner-Anordnung, umfassend:
Bereitstellen einer zellularen Aufprallstruktur mit einem reaktiven Material mit scherverdickenden oder scherversteifenden Eigenschaften, um eine reaktive Aufprallstruktur (60) zu bilden, die **gekennzeichnet ist durch** das Aufweisen von Zellen, die das reaktive Material enthalten;
Anordnen von Komponenten der Fan-Track-Liner-Anordnung einschließlich zusammen der reaktiven Aufprallstruktur;
wodurch die reaktive Aufprallstruktur während der Anordnung nachgiebig ist, um eine geometrische Nichtnachgiebigkeit von Komponenten in der Fan-Track-Liner Anordnung auszugleichen.

8. Verfahren nach Anspruch 7, wobei das Bereitstellen der zellularen Aufprallstruktur das Bilden eines gewellten zellularen Elements (64) umfasst durch:
Bereitstellen eines gerippten Formers (72) auf einer Basisschicht (62) aus Verbundmaterial; Auflegen von Verbundmaterial über dem Former, um eine gewellte Schicht bereitzustellen; optional wobei der gerippte Former eine Vielzahl von einzelnen Rippenbestandteilen umfasst.

9. Verfahren nach Anspruch 8, wobei das Bereitstellen der zellularen Aufprallstruktur das Bilden von ineinandergreifenden gewellten zellularen Elementen umfasst;
optional wobei eines der ineinandergreifenden zellularen Elemente über einem konkaven Dorn gebildet ist und das andere über einem konvexen Dorn gebildet ist.

10. Verfahren nach einem der Ansprüche 8 bis 9, ferner umfassend das Entfernen des gerippten Formers, um Zellen zwischen der gewellten Schicht und der Basisschicht zu definieren;
optional ferner umfassend das Aushärten mindestens des Verbundmaterials der gewellten Schicht nach dem Auflegen der gewellten Schicht und vor dem Entfernen des gerippten Formers.

11. Verfahren nach einem der Ansprüche 8 bis 9, wobei der gerippte Former ein reaktives Material mit scherverdickenden oder scherversteifenden Eigenschaften umfasst.

12. Verfahren nach einem der Ansprüche 7 bis 10, ferner umfassend das Füllen von Zellen der reaktiven Aufprallstruktur mit reaktivem Material nach dem Bilden der Zellen.

13. Verfahren nach einem der Ansprüche 7 bis 12, wobei das Anordnen von Komponenten der Fan-Track-Liner-Anordnung zusammen umfasst:
Bereitstellen einer zweiten zellularen Aufprallstruktur (54) als Schicht radial um oder innerhalb der reaktiven Aufprallstruktur, wobei die zweite Aufprallstruktur eine radiale Steifigkeit aufweist, die höher als eine radiale Steifigkeit der reaktiven Aufprallstruktur bei relativ niedrigen Dehnungsraten ist, die mit normalen Betriebs- oder Herstellungsanordnungslasten verbunden sind;
optional wobei die reaktive Aufprallstruktur eine höhere radiale Steifigkeit als die zweite Aufprallstruktur bei relativ hohen Dehnungsraten aufweist, die mit einem Versagensereignis verbunden sind.

14. Verfahren nach Anspruch 13, wobei der Fan-Track-Liner so angeordnet ist, dass die zweite Aufprallstruktur radial außerhalb der reaktiven Aufprallstruktur angebracht ist.

15. Verfahren nach einem der Ansprüche 13 bis 14, wobei das Anordnen von Komponenten der Fan-Track-Liner-Anordnung zusammen ferner umfasst:
Bereitstellen einer dritten zellularen Aufprallstruktur (94) als Schicht, so dass die reaktive Aufprallstruktur radial zwischen der zweiten und der dritten zellularen Aufprallstruktur angebracht ist; und
wobei die dritte Aufprallstruktur eine radiale Steifigkeit aufweist, die höher als eine radiale Steifigkeit der reaktiven Aufprallstruktur bei relativ niedrigen Dehnungsraten ist, die mit normalen Betriebs- oder Herstellungsanordnungslasten verbunden sind.

## Revendications

1. Assemblage de revêtement de piste de soufflante (53) pour un agencement de confinement d'un moteur à turbine à gaz, l'assemblage comprenant une structure d'impact réactive alvéolaire (60), **caractérisé en ce que** les alvéoles de la structure d'impact réactive contiennent un matériau réactif comportant des propriétés d'épaississement au cisaillement ou de raidissement au cisaillement ;
moyennant quoi la structure d'impact réactive est conforme pendant l'assemblage pour s'adapter à une non-conformité géométrique dans l'assemblage de revêtement de piste de soufflante.

2. Assemblage de revêtement de piste de soufflante selon la revendication 1, dans lequel la structure d'impact réactive est configurée pour se déformer sous des charges d'impact associées à un événement de défaillance, de sorte qu'en cas de défaillance, le matériau réactif augmente en rigidité sous cisaillement.

3. Assemblage de revêtement de piste de soufflante selon l'une quelconque des revendications précédentes, dans lequel la structure d'impact réactive comprend un matériau composite renforcé de fibres ;
éventuellement dans lequel la structure d'impact réactive comprend un élément alvéolaire ondulé comprenant une pluralité d'alvéoles définies entre une couche ondulée (64) et une couche de base (62), dans lequel les alvéoles contiennent le matériau réactif ;
éventuellement dans lequel la structure d'impact réactive comprend deux éléments alvéolaires ondulés enchevêtrés.

4. Assemblage de revêtement de piste de soufflante selon l'une quelconque des revendications précédentes, comprenant une deuxième structure d'impact alvéolaire (54) prévue sous la forme d'une couche radialement autour ou radialement à l'intérieur de la structure d'impact réactive, la deuxième structure d'impact comportant une rigidité radiale qui est supérieure à une rigidité radiale de la structure d'impact réactive à des taux de déformation relativement faibles associés à des charges d'assemblage opérationnelles ou de fabrication normales ;
éventuellement dans lequel la deuxième structure d'impact est disposée radialement à l'extérieur de la structure d'impact réactive.

5. Assemblage de revêtement de piste de soufflante selon la revendication 4, dans lequel la structure d'impact réactif a une rigidité radiale plus élevée que la deuxième structure d'impact à des taux de déformation relativement élevés associés à un événement de défaillance.

6. Assemblage de revêtement de piste de soufflante selon l'une quelconque des revendications 4 à 5, comprenant en outre une troisième structure d'impact alvéolaire (94) prévue sous la forme d'une couche de sorte que la structure d'impact réactive soit radialement entre les deuxième et troisième structures d'impact alvéolaire ; et
dans lequel la troisième structure d'impact a une rigidité radiale qui est supérieure à une rigidité radiale de la structure d'impact réactive à des taux de déformation relativement faibles associés à des charges d'assemblage opérationnelles ou de fabrication normales.

7. Procédé de fabrication d'un assemblage de revêtement de piste de soufflante, comprenant :
la fourniture d'une structure d'impact alvéolaire avec un matériau réactif comportant des propriétés d'épaississement par cisaillement ou de raidissement par cisaillement pour former une structure d'impact réactive (60) **caractérisée en ce qu'**elle comporte des alvéoles contenant le matériau réactif ;
l'assemblage des composants de l'assemblage de revêtement de piste de soufflante, incluant la structure d'impact réactive ;
moyennant quoi la structure d'impact réactive est conforme pendant l'assemblage pour s'adapter à la non-conformité géométrique des composants dans l'assemblage de revêtement de piste de soufflante.

8. Procédé selon la revendication 7, dans lequel la fourniture de la structure d'impact alvéolaire comprend la formation d'un élément alvéolaire ondulé (64) par :
la fourniture d'un gabarit nervuré (72) sur une couche de base (62) de matériau composite ;
le dépôt du matériau composite sur le gabarit pour fournir une couche ondulée ;
éventuellement dans lequel le gabarit nervuré comprend une pluralité d'éléments nervurés discrets.

9. Procédé selon la revendication 8, dans lequel la fourniture de la structure d'impact alvéolaire comprend la formation d'éléments alvéolaires ondulés enchevêtrés ;
éventuellement dans lequel l'un des éléments alvéolaires enchevêtrés est formé sur un mandrin concave, et l'autre est formé sur un mandrin convexe.

10. Procédé selon l'une quelconque des revendications 8 à 9, comprenant en outre le retrait du gabarit nervuré pour définir des alvéoles entre la couche ondulée et la couche de base ;
comprenant éventuellement en outre le durcissement au moins du matériau composite de la couche ondulée après la superposition de la couche ondulée et avant le retrait du gabarit nervuré.

11. Procédé selon l'une quelconque des revendications 8 à 9, dans lequel le gabarit nervuré comprend un matériau réactif comportant des propriétés d'épaississement par cisaillement ou de raidissement par cisaillement.

12. Procédé selon l'une quelconque des revendications 7 à 10, comprenant en outre le remplissage d'alvéoles de la structure d'impact réactive avec un matériau réactif après la formation des alvéoles.

13. Procédé selon l'une quelconque des revendications 7 à 12, dans lequel l'assemblage des composants de l'assemblage de revêtement de piste de soufflante comprend :
la fourniture d'une deuxième structure d'impact alvéolaire (54) en tant que couche radialement autour ou à l'intérieur de la structure d'impact réactive, la deuxième structure d'impact comportant une rigidité radiale qui est supérieure à une rigidité radiale de la structure d'impact réactive à des taux de déformation relativement faibles associés à des charges d'assemblage opérationnelles ou de fabrication normales ;
éventuellement dans lequel la structure d'impact réactive a une rigidité radiale plus élevée que la deuxième structure d'impact à des taux de déformation relativement élevés associés à un événement de défaillance.

14. Procédé selon la revendication 13, dans lequel le revêtement de piste de soufflante est assemblé de sorte que la deuxième structure d'impact soit disposée radialement à l'extérieur de la structure d'impact réactive.

15. Procédé selon l'une quelconque des revendications 13 à 14, dans lequel l'assemblage des composants de l'assemblage de revêtement de piste de soufflante comprend en outre :
la fourniture d'une troisième structure d'impact alvéolaire (94) sous la forme d'une couche de sorte que la structure d'impact réactive soit disposée radialement entre les deuxième et troisième structures d'impact alvéolaires ; et
dans lequel la troisième structure d'impact a une rigidité radiale qui est supérieure à une rigidité radiale de la structure d'impact réactive à des taux de déformation relativement faibles associés à des charges d'assemblage opérationnelles ou de fabrication normales.
